# EUROPEAN PATENT APPLICATION

(11) **EP 4 815 515 A1**
(43) Date of publication of application: **30.09.2026**
(21) Application number: 24910782.2
(22) Date of filing: 13.12.2024
(51) Int. Cl.: H04W 4/021

(54) **COMMUNICATION METHOD AND APPARATUS**

(30) Priority: 28.12.2023 CN 202311853106
(71) Applicant: Huawei Technologies Co., Ltd., Shenzhen, Guangdong 518129 (CN)
(72) Inventor: WANG, Le, Shenzhen, Guangdong 518129 (CN); LI, Yexing, Shenzhen, Guangdong 518129 (CN); YU, Yijun, Shenzhen, Guangdong 518129 (CN)
(74) Representative: Pfenning, Meinig & Partner mbB
(86) International application number: PCT/CN2024/139259
(87) International publication number: WO 2025/139851

(57) **Abstract**

A communication method and apparatus may be used for positioning of terminal devices, to save air interface resources of access network devices by reducing a quantity of access network devices that initiate sensing. The method includes: A first communication apparatus determines first information used to request to initiate sensing, where the first information indicates at least one of the following: an allowable flight area of a terminal device, a first area, a second area, or a GPS position of the terminal device, the first area is a GPS-unavailable area in the allowable flight area of the terminal device, the first area is an overlapping area between the allowable flight area of the terminal device and the second area, and a GPS is unavailable in the second area; and the first communication apparatus sends the first information to a fourth communication apparatus. Correspondingly, the fourth communication apparatus receives the first information from the first communication apparatus, determines the first area based on the first information, and then sends, to at least one second communication apparatus whose coverage includes the first area, second information that indicates the second communication apparatus to initiate sensing.

## Description

This application claims priority to Chinese Patent Application No. 202311853106.1, filed with the China National Intellectual Property Administration on December 28, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

In recent years, with the continuous development of uncrewed aerial vehicle technologies, uncrewed aerial vehicles have been widely used in a plurality of fields, for example, disaster site reconnaissance, earth resource exploration, and forest fire prevention.

A global positioning system (global positioning system, GPS) is a commonly used positioning technology in uncrewed aerial vehicle flight systems, and has advantages of low costs and high accuracy. The GPS can provide navigation and positioning for uncrewed aerial vehicles during flight, to implement autonomous flight and precise control for the uncrewed aerial vehicles. However, GPS positioning requires at least four satellites, and GPS signals may be obstructed in some environments (for example, urban environments), causing a decrease in positioning accuracy. Consequently, in such environments, problems such as low reliability of GPS positions reported by the uncrewed aerial vehicles and poor availability of the GPS during navigation may arise.

To resolve the problems, a sensing function of base stations may be activated throughout an entire flight area of the uncrewed aerial vehicle, so that the base stations report, in real time, position information and the like of the uncrewed aerial vehicle. However, this approach consumes a large quantity of air interface resources of the base stations. When a sensing function and a communication function share air interface resources, network communication performance may be affected.

### SUMMARY

This application provides a communication method and apparatus, to save air interface resources of access network devices.

According to a first aspect, a communication method is provided. The method may be performed by a fourth communication apparatus, may be performed by a component of the fourth communication apparatus, for example, a processor, a chip, a chip system, or the like of the fourth communication apparatus, or may be implemented by a logic module or software that can implement all or a part of functions of the fourth communication apparatus. The method includes: receiving, from a first communication apparatus, first information used to request to initiate sensing; determining a first area based on the first information, where the first area is a GPS-unavailable area in an allowable flight area of a terminal device; and then sending, to at least one second communication apparatus whose coverage includes the first area, second information that indicates the second communication apparatus to initiate sensing.

Based on this solution, the fourth communication apparatus receives, from the first communication apparatus, the first information used to request to initiate sensing, determines the GPS-unavailable area in the allowable flight area of the terminal device based on the first information, and then sends, to the at least one second communication apparatus whose coverage includes the GPS-unavailable area, the second information that indicates to initiate sensing. In comparison with initiating sensing in the entire allowable flight area of the terminal device, this can reduce a quantity of second communication apparatuses that initiate sensing, thereby saving air interface resources of the second communication apparatus. In a possible design, the first information indicates at least one of the following: the allowable flight area of the terminal device, a second area, the first area, or a GPS position of the terminal device, where a GPS is unavailable in the second area; and the first area is an overlapping area between the allowable flight area of the terminal device and the second area.

In a possible design, when the first information does not indicate the second area, the method further includes: sending third information to a third communication apparatus, where the third information is used to request a GPS-unavailable area in a third area, and the third area includes the allowable flight area of the terminal device; and receiving fourth information from the third communication apparatus, where the fourth information indicates the second area, and the second area is the GPS-unavailable area in the third area.

In a possible design, the second information includes at least one of the following: sensing start time, sensing end time, a sensing period, or a first distance, and when a distance between the terminal device and the second communication apparatus is greater than or equal to the first distance, the second communication apparatus initiates sensing.

In a possible design, the method further includes: receiving fifth information from the at least one second communication apparatus, where the fifth information indicates a sensed position of at least one object sensed by the second communication apparatus, and the at least one object includes the terminal device; and sending sixth information to the first communication apparatus, where the sixth information indicates a sensed position of the terminal device.

In a possible design, the sixth information includes the sensed position of the at least one object sensed by the second communication apparatus; or the sixth information includes a correspondence between an identifier of the terminal device and the sensed position of the terminal device.

In a possible design, the method further includes: determining the correspondence between the identifier of the terminal device and the sensed position of the terminal device based on at least one historical GPS position of the terminal device and the sensed position of the at least one object sensed by the second communication apparatus.

Based on the method, the fourth communication apparatus may determine the correspondence between the identifier of the terminal device and the sensed position of the terminal device, so that the first communication apparatus can parse the sixth information to learn of the correspondence between the identifier of the terminal device and the sensed position of the terminal device, and the first communication apparatus does not need to determine the correspondence between the identifier of the terminal device and the sensed position of the terminal device, thereby reducing complexity of the first communication apparatus.

In a possible design, sending the second information to the second communication apparatus includes: when the distance between the terminal device and the second communication apparatus is greater than or equal to the first distance, sending the second information to the second communication apparatus.

In a possible design, the first distance is greater than or equal to four times a sensing distance error of the second communication apparatus.

According to a second aspect, a communication method is provided. The method may be performed by a first communication apparatus, may be performed by a component of the first communication apparatus, for example, a processor, a chip, a chip system, or the like of the first communication apparatus, or may be implemented by a logic module or software that can implement all or a part of functions of the first communication apparatus. The method includes: determining first information used to request to initiate sensing, and sending the first information to a fourth communication apparatus, where the first information indicates at least one of the following: an allowable flight area of a terminal device, a first area, a second area, or a GPS position of the terminal device, the first area is a GPS-unavailable area in the allowable flight area of the terminal device, the first area is an overlapping area between the allowable flight area of the terminal device and the second area, and a GPS is unavailable in the second area.

Based on this solution, the first communication apparatus determines the first information that indicates the at least one of the following: the allowable flight area of the terminal device, the first area, the second area, or the GPS position of the terminal device, and the first communication apparatus sends, to the fourth communication apparatus, the first information used to request to initiate sensing, so that at least one second communication apparatus subsequently provides a sensing service in the GPS-unavailable area in the allowable flight area of the terminal device. In comparison with initiating sensing in the entire allowable flight area of the terminal device, a quantity of second communication apparatuses that initiate sensing can be reduced, and air interface resources of the second communication apparatus are saved.

In a possible design, the method further includes: receiving sixth information, where the sixth information indicates a sensed position of the terminal device sensed by at least one second communication apparatus, and a coverage of the at least one second communication apparatus includes the first area.

In a possible design, the sixth information includes a sensed position of at least one object sensed by the second communication apparatus, and the at least one object includes the terminal device; or the sixth information includes a correspondence between an identifier of the terminal device and the sensed position of the terminal device.

According to a third aspect, a communication apparatus is provided, to implement various methods. The communication apparatus may be the fourth communication apparatus in the first aspect, or an apparatus included in the fourth communication apparatus, for example, a chip or a chip system. Alternatively, the communication apparatus may be the first communication apparatus in the second aspect, or an apparatus included in the first communication apparatus, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided, and includes a processor. The processor is configured to run a computer program or instructions, to cause the communication apparatus to perform the method according to any one of the aspects. The communication apparatus may be the fourth communication apparatus in the first aspect, or an apparatus included in the fourth communication apparatus, for example, a chip or a chip system. Alternatively, the communication apparatus may be the first communication apparatus in the second aspect, or an apparatus included in the first communication apparatus, for example, a chip or a chip system.

In some possible designs, the communication apparatus includes a memory; and the memory is configured to store necessary program instructions and data. The memory may be coupled to the processor, or may be independent of the processor.

According to a fifth aspect, a communication apparatus is provided, and includes a processor and a communication interface. The communication interface is configured to receive a signal and/or send a signal; and the processor is configured to execute a computer program or instructions, to cause the communication apparatus to perform the method according to any one of the aspects. The communication apparatus may be the fourth communication apparatus in the first aspect, or an apparatus included in the fourth communication apparatus, for example, a chip or a chip system. Alternatively, the communication apparatus may be the first communication apparatus in the second aspect, or an apparatus included in the first communication apparatus, for example, a chip or a chip system.

According to a sixth aspect, a computer-readable storage medium is provided. The computer-readable storage medium stores a computer program or instructions. When the computer program or instructions are run on a communication apparatus, the communication apparatus is caused to perform the method according to any one of the aspects.

According to a seventh aspect, a communication apparatus (for example, the communication apparatus may be a chip or a chip system) is provided. The communication apparatus includes a processor, configured to implement functions in any one of the aspects.

In some possible designs, the communication apparatus includes a memory, and the memory is configured to store necessary program instructions and data.

In some possible designs, when the apparatus is the chip system, the apparatus may include a chip, or may include a chip and another discrete component.

According to an eighth aspect, a computer program product including instructions is provided. When the instructions are run on a communication apparatus, the communication apparatus is caused to perform the method according to any one of the aspects.

It may be understood that, when the communication apparatus according to any one of the third aspect to the eighth aspect is a chip or a chip system, a sending action/function of the communication apparatus may be understood as outputting information, and a receiving action/function of the communication apparatus may be understood as inputting information.

For technical effects brought by any one of the design manners of the third aspect to the eighth aspect, refer to technical effects brought by different design manners of the first aspect and the second aspect. Details are not described herein again.

### BRIEF DESCRIPTION OF DRAWINGS

FIG. 1 is a diagram of a GPS signal being obstructed according to this application;
FIG. 2 is a schematic flowchart of a sensing positioning method according to this application;
FIG. 3 is a schematic flowchart of a communication method according to this application;
FIG. 4 is a diagram of a structure of a communication system according to this application;
FIG. 5 is a diagram of a structure of another communication system according to this application;
FIG. 6 is a diagram of a structure of still another communication system according to this application;
FIG. 7 is a diagram of a structure of yet another communication system according to this application;
FIG. 8 is a diagram of a structure of a communication system according to this application;
FIG. 9 is a schematic flowchart of a communication method according to this application;
FIG. 10 is a diagram of a first area according to this application;
FIG. 11 is a schematic flowchart of another communication method according to this application;
FIG. 12 is a schematic flowchart of still another communication method according to this application;
FIG. 13 is a diagram of a sensing angle error and a sensing distance error according to this application;
FIG. 14 is a diagram of determining a correspondence between an identifier of a terminal device and a sensed position of the terminal device according to this application;
FIG. 15a, FIG. 15b, and FIG. 15c each are a diagram of another correspondence between an identifier of a terminal device and a sensed position of the terminal device according to this application;
FIG. 16 is a schematic flowchart of yet another communication method according to this application;
FIG. 17 is a schematic flowchart of a communication method according to this application;
FIG. 18 is a schematic flowchart of another communication method according to this application;
FIG. 19 is a diagram of a structure of a communication apparatus according to this application; and
FIG. 20 is a diagram of a structure of another communication apparatus according to this application.

### DESCRIPTION OF EMBODIMENTS

In descriptions of this application, unless otherwise specified, "/" indicates that associated objects are in an "or" relationship, for example, A/B may indicate A or B. "And/or" in this application merely describes an association relationship between associated objects and indicates that three relationships may exist. For example, A and/or B may indicate three cases: Only A exists, both A and B exist, and only B exists, where A and B may be singular or plural.

In the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to facilitate clearly describing the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

In addition, in embodiments of this application, the term such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not constitute any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, apparatuses provided in embodiments of this application may also correspondingly implement these features or functions. Details are not described herein.

In this application, unless otherwise specified, for same or similar parts of embodiments, refer to each other. In implementations of this application, unless otherwise stated or there is a logic conflict, terms and/or descriptions in different implementations are consistent and may be mutually referenced, and technical features in different embodiments and implementations in embodiments may be combined based on an internal logical relationship thereof, to form a new implementation. The following implementations of this application do not constitute any limitation on the protection scope of this application.

For ease of understanding of technical solutions in embodiments of this application, the following first briefly describes technologies related to this application.

### (1) Wireless sensing

In the wireless sensing, existence information, position information, and the like of a target may be obtained by using a radio signal. The wireless sensing includes device-based sensing (device-based sensing) and device-free sensing (device-free sensing). The device-based sensing mainly refers to that positioning is completed by using a device having a communication module to perform information exchange with a network device, and the device-free sensing is sensing the target in a location, a posture, and the like by using the network device. The device-free sensing is derived from a radar technology.

### (2) Integrated sensing and communication

The integrated sensing and communication (also referred to as harmonized communication and sensing) is a technology that implements unified design of a communication function and a sensing function through joint signal design, hardware sharing, and/or the like, and has gains in a plurality of aspects such as improving spectrum efficiency, improving sensing accuracy, reducing costs, and simplifying a deployment. In an integrated sensing and communication technology, a transmitter may transmit a radio signal to an object. Because the object has an area, the object may reflect the signal. A receiver may receive the reflected radio signal and analyze the signal, to obtain sensing measurement information of the object, such as an angle and latency.

In a cellular network, a communication technology of a wireless base station evolves toward multiple-antenna, multiple-input multiple-output (multiple-input multiple-output, MIMO), and large-scale arrays, and converges with a radar technology. In addition, the cellular network features an extensive deployment, abundant spectrums, and the like, so that the base station can perform sensing while implementing communication, and obtain measurement quantities such as latency and angle information. Based on these measurement quantities, the cellular network may implement existence detection of the object, or perform high-accuracy positioning on an object position. However, because the sensing function and the communication function share air interface resources, and the sensing accuracy depends on the air interface resource occupied by the sensing function, impact on network resource occupation and communication performance needs to be considered for activating the sensing function. For example, positioning accuracy of sensing depends on bandwidth used by a sensing signal and a proportion of a sensing symbol in a slot, and larger bandwidth and a larger proportion of the sensing symbol indicate higher positioning accuracy.

### (3) Global positioning system (global positioning system, GPS)

The GPS is a navigation and positioning technology that uses radio signals transmitted by artificial earth satellites, and features global coverage, all-weather operation, high accuracy, good confidentiality, and anti-interference performance. Civil GPS positioning provides an absolute accuracy of approximately 10 meters. Currently, the GPS technology has been widely applied in various industries, and common use scenarios include uncrewed aerial vehicle positioning and navigation.

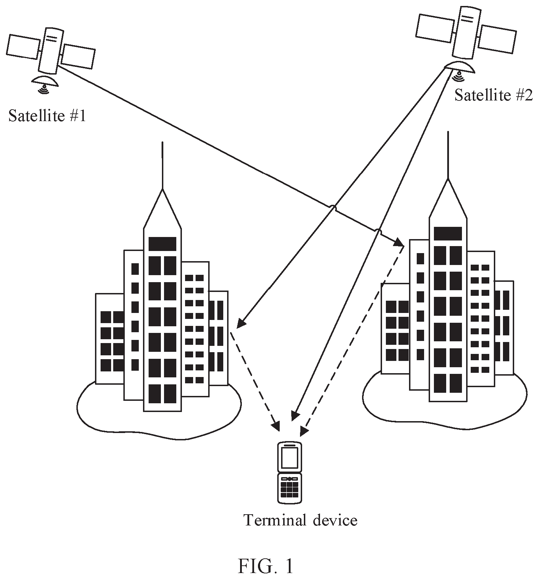

However, GPS positioning requires at least four satellites. In addition, as shown in FIG. 1, GPS signals may be obstructed in some environments (for example, urban environments), thereby causing refraction or reflection and the like, as indicated by the dashed lines in FIG. 1. GPS positioning accuracy is degraded. Consequently, in such environments, problems such as low reliability of GPS positions from uncrewed aerial vehicles and poor availability of a GPS may arise.

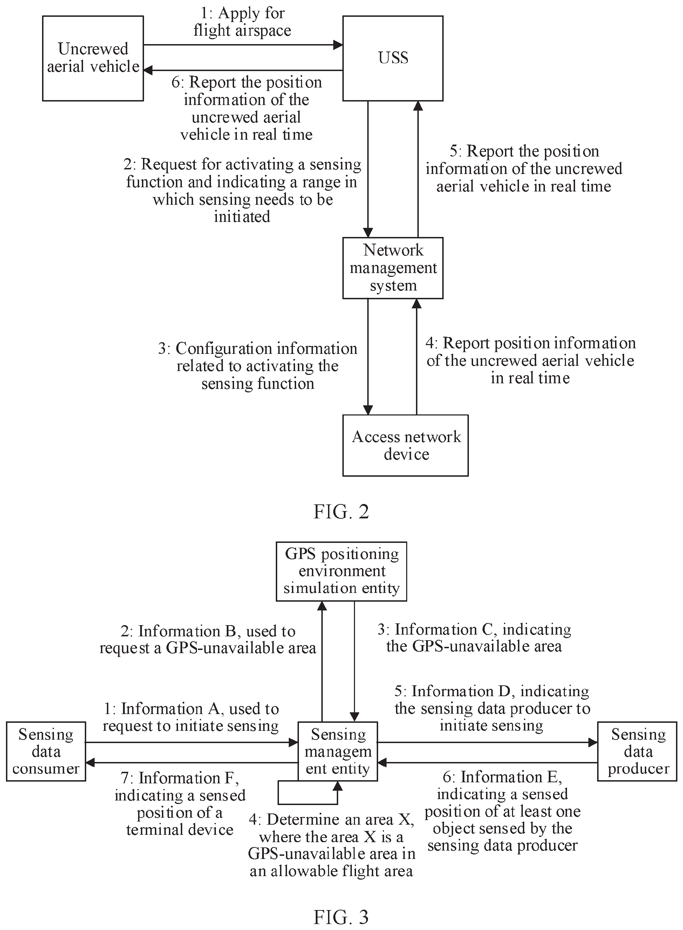

To resolve the problems, as shown in FIG. 2, after an uncrewed aerial vehicle applies for flight airspace to an unmanned system (unmanned aircraft system, UAS) service supplier (UAS service supplier, USS), the USS sends, to a network management system, a request for activating a sensing function, and indicates a range (to be specific, the flight airspace applied for by the uncrewed aerial vehicle) in which sensing needs to be initiated. The network management system selects at least one access network device based on the received request, where total coverage of the at least one access network device includes the flight airspace applied for by the uncrewed aerial vehicle, and sends, to the at least one access network device, configuration information related to activating the sensing function. After receiving the information, the at least one access network device activating the sensing function, and reports position information of the uncrewed aerial vehicle to the network management system in real time. Then, the network management system reports the obtained position information of the uncrewed aerial vehicle to the USS in real time, and the USS reports the position information of the uncrewed aerial vehicle to the uncrewed aerial vehicle in real time.

In the foregoing solution, the total coverage of the at least one access network device includes the flight airspace applied for by the uncrewed aerial vehicle. However, the flight airspace applied for by the uncrewed aerial vehicle may include an area having good GPS signal quality and an area having poor GPS signal quality. However, in the foregoing solution, the at least one access network device also activates the sensing function in the area having the good GPS signal quality. Consequently, large air interface resources of the at least one access network device are consumed. When a sensing function and a communication function share air interface resources, communication performance of a network may be affected.

In view of this, this application proposes a communication method, so that a GPS-unavailable area in an allowable flight area of a terminal device can be obtained, and then at least one access network device whose coverage includes the GPS-unavailable area can be indicated to initiate sensing, thereby reducing a quantity of access network devices that initiate sensing, and saving air interface resources of access network devices.

The technical solutions in embodiments of this application may be applied to various systems, for example, a sensing system and an integrated sensing and communication system. The integrated sensing and communication system may be a 3rd generation partnership project (3rd generation partnership project, 3GPP) communication system, for example, a 4th generation (4th generation, 4G) system, for example, a long term evolution (long term evolution, LTE) system, a 5G system such as a new radio (new radio, NR) system, an LTE and 5G hybrid networking system, a non-terrestrial network (non-terrestrial network, NTN), or another next generation communication system. This is not limited.

As a possible and non-limiting system, as shown in FIG. 3, a communication system applicable to this application may include at least one of a sensing data producer, a sensing management entity, a sensing data consumer, or a GPS positioning environment simulation entity.

The sensing data producer has a sensing capability, is mainly responsible for sensing a position of an object in an environment, and can provide a sensing service.

The sensing management entity is configured to manage the sensing data producer, for example, may configure sensing data producer and collect data.

The sensing data consumer is mainly configured to use sensing data. Further, the sensing data consumer is configured to request the sensing management entity to provide or enable a sensing service.

The GPS positioning environment simulation entity can simulate a GPS satellite to provide GPS signal strength or performance of GPS positioning (for example, GPS availability or unavailability) in a geographical area. For example, the GPS positioning environment simulation entity simulates a running route of a GPS positioning satellite (that is, simulates a GPS satellite ephemeris), models the geographical area, and determines the performance of the GPS positioning in the geographical area based on the GPS satellite ephemeris. For example, whether a GPS is available is determined based on multipath reflection between a satellite and a position in the geographical area or based on the GPS satellite ephemeris. A line of sight (line of sight, LOS) area corresponding to the GPS satellite is determined as a GPS-available area, and a non-line-of-sight (non-line-of-sight, NLOS) area is determined as a GPS-unavailable area.

In a possible implementation, the sensing data producer, the sensing management entity, the sensing data consumer, and the GPS positioning environment simulation entity are logical modules or logical entities. In actual application, the foregoing different logical modules or logical entities may be deployed or integrated in a same apparatus, or may be deployed in different apparatuses. In other words, different logical modules or logical entities may be implemented by a same apparatus, or may be implemented by different apparatuses. This is not specifically limited in this application.

In an example, a function of the sensing data producer may be implemented by an access network device. In other words, the sensing data producer may be deployed in the access network device. A function of the sensing data consumer may be implemented by an airspace management entity. In other words, the sensing data consumer may be deployed in the airspace management entity. A function of the sensing management entity may be implemented by a network management entity. In other words, the sensing management entity may be deployed in the network management entity. The GPS positioning environment simulation entity is implemented by a positioning-related service provider. For example, the GPS positioning environment simulation entity may be deployed in the airspace management entity or the network management entity, or may be deployed in an independent apparatus.

Optionally, the access network device has a sensing capability and a communication capability, and may also be referred to as an integrated sensing and communication access network device. For example, the access network device can sense a location of an air object in coverage of the access network device, and report position information of a sensing target to the network management entity periodically or in an event-triggered manner.

In addition, the access network device can access a terminal device to a wireless network. The access network device may be a node in a radio access network (radio access network, RAN), and may be referred to as a base station, or may be referred to as a radio access network node.

For example, the access network device may include an evolved NodeB (NodeB or eNB or e-NodeB, evolutional NodeB) in a long term evolution (long term evolution, LTE) system or an LTE-advanced (LTE-advanced, LTE-A) system, for example, a conventional macro base station eNB and a micro base station eNB in a heterogeneous network scenario, may include next generation NodeB (next generation NodeB, gNB) in an NR system, or may include a transmission reception point (transmission reception point, TRP), a home base station (for example, home evolved NodeB or home NodeB, HNB), a baseband unit (baseband unit, BBU), a baseband unit pool (BBU pool), a wireless fidelity (wireless fidelity, Wi-Fi) access point (access point, AP), or the like.

Alternatively, the access network device may be a module or unit that can implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, the access network device may be an access network device or a module of the access network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of the software module and the hardware module.

Optionally, the terminal device may be a user-side device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. For example, the terminal device may be an uncrewed aerial vehicle, an uncrewed aerial vehicle having an uncrewed aerial vehicle (uncrewed aerial vehicle, UAV) to uncrewed aerial vehicle (UAV to UAV, U2U) communication capability, or the like. A specific device form factor of the terminal device is not limited in embodiments of this application.

Optionally, the airspace management entity is configured to manage airspace or a terminal device in the airspace. The airspace management entity may be, for example, a USS entity defined in the 3rd generation partnership project (3rd generation partnership project, 3GPP) standard. For example, the airspace management entity may be responsible for operating a service related to uncrewed aerial vehicles, and managing, scheduling, or providing a service for the uncrewed aerial vehicles.

Optionally, the network management entity is configured to manage the access network device. In addition, the network management entity may further receive a request from the airspace management entity, and respond to the request. For example, the network management entity can collect information reported by the access network device, set a route to a corresponding access network device based on a regulated airspace range, and configure collection. The network management entity may be, for example, an element management system (element management system, EMS) entity or a network management system (network management system, NMS) entity. The NMS entity is responsible for managing a plurality of EMS entities, and the EMS entity is responsible for managing a plurality of access network devices. Based on the foregoing descriptions, this application provides an example communication system. The communication system includes at least one airspace management entity, at least one network management entity, and at least one access network device. The communication system may have the following five architectures.

### (1) Architecture 1

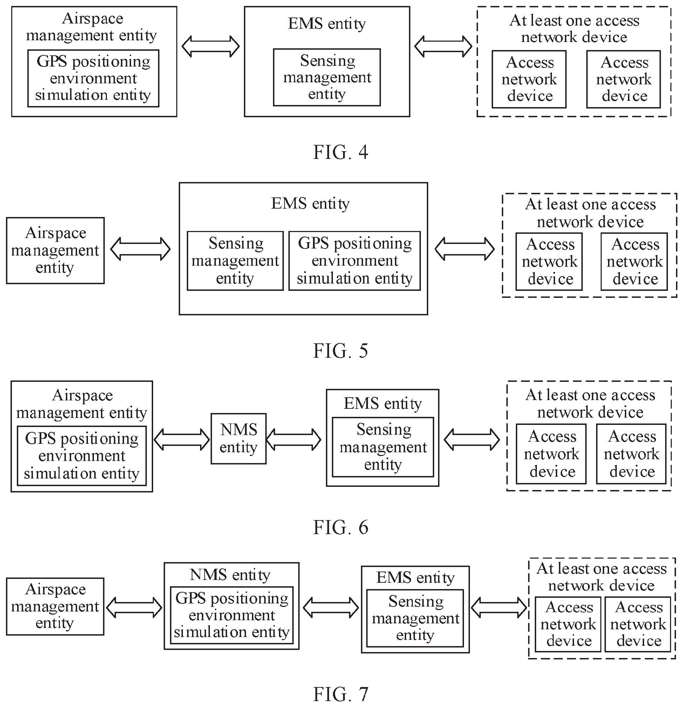

As shown in FIG. 4, an example in which a network management entity is an EMS entity is used. The communication system includes at least one airspace management entity, at least one EMS entity, and at least one access network device. A GPS positioning environment simulation entity is in the airspace management entity, a function of a sensing data producer is implemented by the access network device, a function of a sensing data consumer may be implemented by the airspace management entity, and a function of the GPS positioning environment simulation entity may be implemented by the airspace management entity.

### (2) Architecture 2

As shown in FIG. 5, an example in which a network management entity is an EMS entity is used. The communication system includes at least one airspace management entity, at least one EMS entity, and at least one access network device. A sensing management entity and a GPS positioning environment simulation entity are in the EMS entity, a function of the sensing data producer is implemented by the access network device, and a function of a sensing data consumer may be implemented by the airspace management entity.

### (3) Architecture 3

As shown in FIG. 6, the communication system includes at least one airspace management entity, at least two network management entities, and at least one access network device. The at least two network management entities include at least one NMS entity and at least one EMS entity, a sensing management entity is in the EMS entity, a GPS positioning environment simulation entity is in the airspace management entity, a function of a sensing data producer is implemented by the access network device, and a function of a sensing data consumer may be implemented by the airspace management entity.

### (4) Architecture 4

As shown in FIG. 7, the communication system includes at least one airspace management entity, at least two network management entities, and at least one access network device. The at least two network management entities include at least one NMS entity and at least one EMS entity, a sensing management entity is in the EMS entity, a GPS positioning environment simulation entity is in the NMS entity, a function of a sensing data producer is implemented by the access network device, and a function of a sensing data consumer may be implemented by the airspace management entity.

### (5) Architecture 5

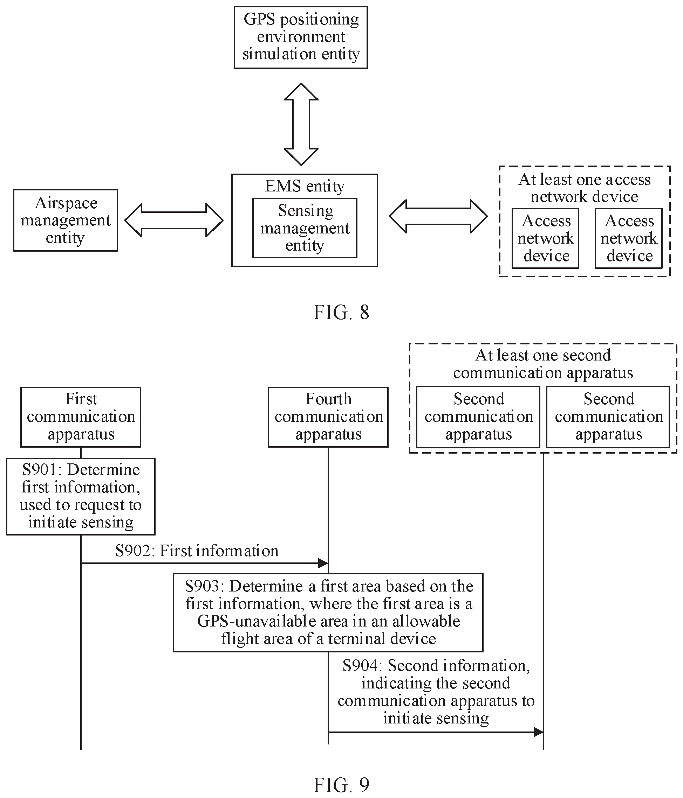

When a GPS positioning environment simulation entity is independently deployed, as shown in FIG. 8, an example in which a network management entity is an EMS entity is used. The communication system includes at least one airspace management entity, at least one EMS entity, at least one GPS positioning environment simulation entity, and at least one access network device. A sensing management entity is in the EMS entity, a function of a sensing data producer is implemented by the access network device, and a function of a sensing data consumer may be implemented by the airspace management entity.

The foregoing communication systems applicable to this application are merely examples for description, and communication systems applicable to this application are not limited thereto. This applies throughout and will not be repeated below.

Based on the communication system shown in FIG. 3, this application provides a communication method. Refer to FIG. 3. The method may include: The sensing data consumer sends information A to the sensing management entity, where the information A is used to request to initiate sensing, and indicates an allowable flight area of a terminal device. After receiving the information A, the sensing management entity sends information B to the GPS positioning environment simulation entity, where the information B is used to request a GPS-unavailable area. After receiving the information B, the GPS positioning environment simulation entity sends information C to the sensing management entity, where the information C indicates the GPS-unavailable area. After receiving the information C, the sensing management entity determines a GPS-unavailable area (denoted as an area X) in the allowable flight area of the terminal device based on the GPS-unavailable area indicated by the information C, for example, determines, as the unavailable area in the allowable flight area, an intersection of the GPS-unavailable area indicated by the information C and the allowable flight area, and then sends information D to at least one sensing data producer whose coverage includes the area X, where the information D indicates the sensing data producer to initiate sensing. After receiving the information D, the sensing data producer activates a sensing function for sensing, and sends information E to the sensing management entity, where the information E indicates a sensed position of at least one object sensed by the sensing data producer, and the at least one object includes the terminal device. After receiving the information E, the sensing management entity sends information F to the sensing data consumer, where the information F indicates a sensed position of the terminal device. Correspondingly, the sensing data consumer receives the information F.

It should be noted that at least two entities among the sensing data producer, the sensing management entity, the sensing data consumer, and the GPS positioning environment simulation entity may be deployed in a same apparatus. For example, in Architecture 1 shown in FIG. 4 and Architecture 3 shown in FIG. 6, the sensing data consumer and the GPS positioning environment simulation entity are deployed in the airspace management entity; and in Architecture 2 shown in FIG. 5, the sensing management entity and the GPS positioning environment simulation entity are deployed in the EMS entity. In this case, in the method shown in FIG. 3, interaction between the at least two entities is an internal implementation of the apparatus, and the interaction may not be performed.

The following describes the foregoing communication method provided in embodiments of this application in detail with reference to the architectures shown in FIG. 4 to FIG. 8. In the following embodiments of this application, a method step performed by an execution body or each apparatus may be implemented by at least one chip in the execution body or each apparatus during specific implementation.

It may be understood that in embodiments of this application, the execution body or each apparatus may perform a part or all of steps in embodiments of this application. These steps or operations are merely examples. In embodiments of this application, another operation or variants of various operations may further be performed. In addition, the steps may be performed in a sequence different from that presented in embodiments of this application, and not all the operations in embodiments of this application may be necessarily performed.

It should be noted that, in the following embodiments of this application, names of messages or names of parameters in the messages of devices are merely examples, and the messages or the parameters may have other names during specific implementations. This is not specifically limited in embodiments of this application.

FIG. 9 shows a communication method according to an embodiment of this application. The communication method includes the following steps.

S901: A first communication apparatus determines first information. The first information is used to request to initiate sensing.

In a possible implementation, the first communication apparatus may be an airspace management entity. For example, in Architecture 1, Architecture 2, and Architecture 5, the first communication apparatus may be the airspace management entity.

In another possible implementation, the first communication apparatus may be an NMS entity. For example, in Architecture 3 and Architecture 4, the first communication apparatus may be the NMS entity.

Optionally, the first information indicates at least one of the following: an allowable flight area of a terminal device, a second area, a first area, or a GPS position of the terminal device. A GPS is unavailable in the second area; and the first area is an overlapping area between the allowable flight area of the terminal device and the second area.

In this embodiment of this application, that the GPS is unavailable may also be referred to as that a GPS signal is unavailable or performance of GPS positioning is poor. The three descriptions are interchangeable.

In a first possible implementation, the first information may indicate the allowable flight area of the terminal device. For example, in Architecture 2 and Architecture 5, the first information may indicate the allowable flight area of the terminal device.

In a second possible implementation, the first information may indicate the first area, and the first area is a GPS-unavailable area in the allowable flight area of the terminal device. For example, in the communication systems shown in Architecture 1, Architecture 3, and Architecture 4, the first information may indicate the first area.

For example, the allowable flight area of the terminal device is divided into two parts depending on whether the GPS is available. A first part is a GPS-available area in the allowable flight area of the terminal device, and a second part is the GPS-unavailable area in the allowable flight area of the terminal device, where the second part is also referred to as the first area.

In a third possible implementation, the first information may indicate the allowable flight area of the terminal device and the second area. For example, in the communication systems shown in Architecture 1, Architecture 3, and Architecture 4, the first information may indicate the allowable flight area of the terminal device and the second area.

Optionally, the second area is obtained by determining, by a communication apparatus in which a GPS positioning environment simulation entity is deployed, performance of GPS positioning in a third area based on a GPS satellite ephemeris. The third area includes the allowable flight area of the terminal device and the second area, and the second area is a GPS-unavailable area in the third area.

In a possible example, in Architecture 1, the allowable flight area of the terminal device is reported by the terminal device to the airspace management entity, the third area may be determined by the airspace management entity, the GPS positioning environment simulation entity is deployed in the airspace management entity, and the airspace management entity may determine the performance of the GPS positioning in the third area based on the GPS satellite ephemeris to obtain the second area. Then, the airspace management entity may determine the first area based on the allowable flight area of the terminal device and the second area, and then indicate the first area to the EMS entity; or the airspace management entity indicates the allowable flight area and the second area to the EMS entity, and then the EMS entity determines the first area based on the allowable flight area of the terminal device and the second area.

In another possible example, in Architecture 4, the allowable flight area of the terminal device is reported by the terminal device to the airspace management entity, and the airspace management entity may indicate the allowable flight area of the terminal device to the NMS. The third area may be indicated by the airspace management entity to the NMS, or the third area may be determined by the NMS entity. The GPS positioning environment simulation entity is deployed in the NMS entity. The NMS entity may determine the performance of the GPS positioning in the third area based on the GPS satellite ephemeris to obtain the second area. The NMS entity may further determine the first area based on the allowable flight area of the terminal device and the second area; or the NMS entity indicates the allowable flight area and the second area to the EMS entity, and then the EMS entity determines the first area based on the allowable flight area of the terminal device and the second area.

In still another possible example, in the communication system shown in Architecture 3, the allowable flight area of the terminal device is reported by the terminal device to the airspace management entity, the third area may be determined by the airspace management entity, the GPS positioning environment simulation entity is deployed in the airspace management entity, and the airspace management entity may determine the performance of the GPS positioning in the third area based on the GPS satellite ephemeris to obtain the second area. The airspace management entity may further determine the first area based on the allowable flight area of the terminal device and the second area; or the airspace management entity indicates the allowable flight area and the second area to the NMS entity; and then the NMS entity determines the first area based on the allowable flight area of the terminal device and the second area; or the NMS entity indicates the allowable flight area and the second area to the EMS entity, and then the EMS entity determines the first area based on the allowable flight area of the terminal device and the second area.

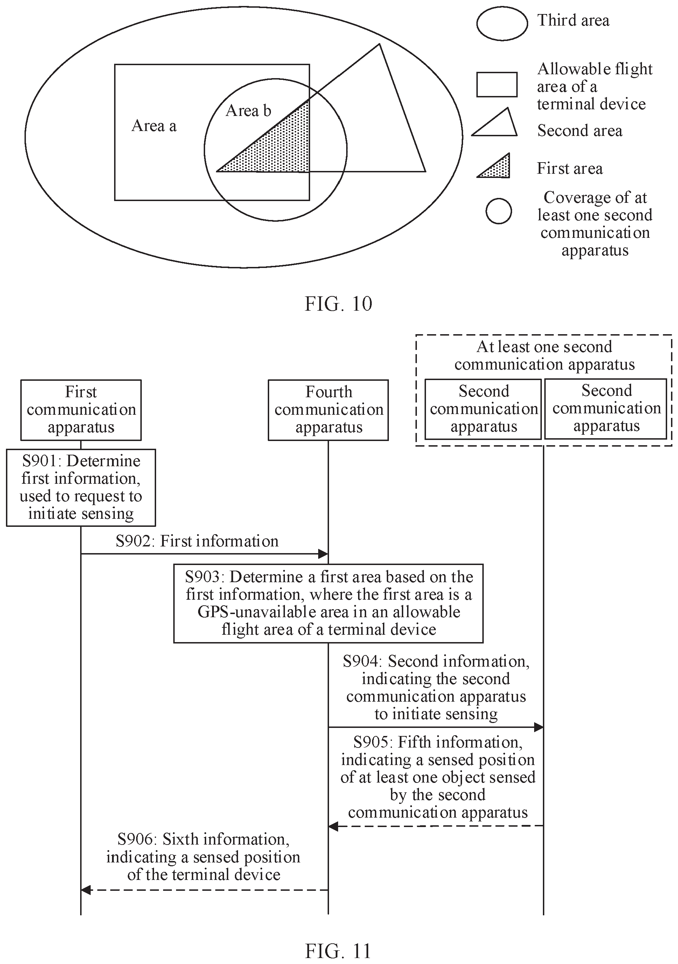

As shown in FIG. 10, an example in which the third area is an elliptic area, the second area is an acute-triangle area in the elliptic area, and the allowable flight area of the terminal device is a rectangular area in the elliptic area is used. The first area is an overlapping area between the rectangular area and the acute-triangle area, that is, a shaded triangle area.

Based on the foregoing three implementations, the first information may further indicate the GPS position of the terminal device.

For example, when the terminal device is in a GPS-reliable area (an unshaded part in the rectangular area shown in FIG. 10) in the allowable flight area of the terminal device, the first communication apparatus may obtain the GPS position of the terminal device.

S902: The first communication apparatus sends the first information to a fourth communication apparatus, and correspondingly, the fourth communication apparatus receives the first information from the first communication apparatus.

For example, the fourth communication apparatus may be an EMS entity. For example, in Architecture 1, Architecture 2, Architecture 3, Architecture 4, and Architecture 5, the fourth communication apparatus may be the EMS entity.

S903: The fourth communication apparatus determines the first area based on the first information. For the first area, refer to the related descriptions in step S901. Details are not described herein again.

In a first possible implementation, when the first information indicates the allowable flight area of the terminal device (that is, the first information does not indicate the second area or the first area), the fourth communication apparatus parses the first information to learn of the allowable flight area of the terminal device.

Optionally, in the possible implementation, the fourth communication apparatus may further determine the second area, and then determine the first area based on the second area and the allowable flight area.

In a possible example, in the communication system shown in Architecture 2, the GPS positioning environment simulation entity is deployed in the fourth communication apparatus, and the fourth communication apparatus may determine the performance of the GPS positioning in the third area based on the GPS satellite ephemeris to obtain the second area.

In another possible example, in the communication system shown in Architecture 5, the GPS positioning environment simulation entity is independently deployed, for example, deployed in a third communication apparatus. In this case, the fourth communication apparatus may perform information exchange with the third communication apparatus to obtain the second area. Specific implementation is described in subsequent embodiments. Details are not described herein.

In the foregoing two possible examples, the third area may be indicated by the first communication apparatus, for example, indicated by the first information, or the third area may be determined by the fourth communication apparatus.

In a second possible implementation, when the first information indicates the first area, the fourth communication apparatus parses the first information to learn of the first area.

In a third possible implementation, when the first information indicates the allowable flight area of the terminal device and the second area, the fourth communication apparatus parses the first information to learn of the allowable flight area of the terminal device and the second area, and then determines the first area based on the overlapping area between the allowable flight area of the terminal device and the second area.

S904: The fourth communication apparatus separately sends second information to at least one second communication apparatus, and correspondingly, the at least one second communication apparatus separately receive the second information from the fourth communication apparatus.

For example, the second communication apparatus may be an access network device. For example, in Architecture 1, Architecture 2, Architecture 3, Architecture 4, and Architecture 5, the second communication apparatus may be the access network device.

Coverage of the at least one second communication apparatus includes the first area. For example, total coverage of the at least one second communication apparatus includes the first area; or coverage of a second communication apparatus includes a part or all of the first area.

Optionally, the fourth communication apparatus may search for, based on a range of the first area, the at least one second communication apparatus whose coverage includes the first area.

Optionally, the coverage of the at least one second communication apparatus not only includes the first area, but also includes a part of the GPS-available area in the allowable flight area of the terminal device.

As shown in FIG. 10, an example in which the allowable flight area of the terminal device is the rectangular area, the second area is the acute-triangle area, the first area is the shaded triangle area, and the coverage of the at least one second communication apparatus is a circular area is used. The allowable flight area of the terminal device is divided into three parts, which are denoted as an area a, an area b, and the first area. The area a and the area b are in the GPS-available area in the allowable flight area of the terminal device. In addition, the area b and the first area are in the circular area. In other words, the coverage of the at least one second communication apparatus includes the first area and the area b. The at least one second communication apparatus may sense positions of all objects in the area b and the first area.

The second information indicates the second communication apparatus to initiate sensing. After receiving the second information, the second communication apparatus activates a sensing function for sensing.

Optionally, the second information includes at least one of the following: sensing start time, sensing end time, a sensing period, the GPS position of the terminal device, a first distance, or a second distance.

For example, the sensing start time indicates a time point at which the second communication apparatus activates the sensing function or a time point at which the second communication apparatus starts sensing, the sensing end time indicates a time point at which the second communication apparatus deactivates the sensing function or a time point at which the second communication apparatus stops sensing, the sensing period indicates a period in which the second communication apparatus senses an object in the coverage of the second communication apparatus, and the first distance and the second distance each indicate a distance. For example, the first distance is greater than or equal to four times a sensing distance error of the second communication apparatus. The second distance is greater than the first distance. The second distance may be protocol-defined, or may be determined by the fourth communication apparatus. This is not limited.

In a possible implementation, when the at least one second communication apparatus includes a plurality of second communication apparatuses, parameters in second information corresponding to different second communication apparatuses may be different or may be the same. For example, the fourth communication apparatus may separately determine second information for the plurality of second communication apparatuses based on sensing service requirements. For example, based on sensing accuracy of the service requirements, the fourth communication apparatus separately sends, to the plurality of second communication apparatuses respectively, second information indicating different sensing periods (namely, sensing frame intervals). After respectively receiving the second information, the plurality of second communication apparatuses activate sensing functions based on the second information to sense objects in coverage of the plurality of second communication apparatuses.

In a possible implementation, after finding the at least one second communication apparatus that meets a coverage requirement, the fourth communication apparatus immediately separately sends the second information to the at least one second communication apparatus.

In another possible implementation, after finding the at least one second communication apparatus that meets a coverage requirement, the fourth communication apparatus sends the second information to the second communication apparatus when a distance between the terminal device and the second communication apparatus is greater than or equal to the first distance; or the fourth communication apparatus sends the second information to the second communication apparatus when a distance between the terminal device and the second communication apparatus is greater than or equal to the first distance and less than or equal to the second distance.

For example, when the first information indicates the GPS position of the terminal device, the fourth communication apparatus parses the first information to learn of the GPS position of the terminal device, and then calculates the distance between the terminal device and the second communication apparatus based on the GPS position of the terminal device and a position of the second communication apparatus. When the distance between the terminal device and the second communication apparatus is greater than or equal to the first distance, or when the distance between the terminal device and the second communication apparatus is greater than or equal to the first distance and less than or equal to the second distance, the fourth communication apparatus then sends the second information to the second communication apparatus.

Based on the method, when the distance between the terminal device and the second communication apparatus is greater than the second distance, the fourth communication apparatus does not need to send the second information to the second communication apparatus, and the second communication apparatus does not need to activate the sensing function. Therefore, sensing start time of the second communication apparatus is reduced, and air interface resources of the second communication apparatus are saved.

In a possible implementation, after receiving the second information, the second communication apparatus initiates sensing based on the sensing start time indicated in the second information, or immediately initiates sensing.

In another possible implementation, after receiving the second information, the second communication apparatus activates the sensing function when the distance between the terminal device and the second communication apparatus is greater than or equal to the first distance; or the second communication apparatus activates the sensing function when the distance between the terminal device and the second communication apparatus is greater than or equal to the first distance and less than or equal to the second distance.

For example, when the second information includes the GPS position of the terminal device, the first distance, and the second distance, the second communication apparatus may calculate the distance between the terminal device and the second communication apparatus based on the GPS position of the terminal device and the position of the second communication apparatus. When a distance between the GPS position of the terminal device and the second communication apparatus is greater than or equal to the first distance, or when a distance between the GPS position of the terminal device and the second communication apparatus is greater than or equal to the first distance and less than or equal to the second distance, the second communication apparatus activates the sensing function.

Based on the method, when the distance between the terminal device and the second communication apparatus is greater than the second distance, the second communication apparatus does not need to initiate sensing. Therefore, sensing start time of the second communication apparatus is reduced, and air interface resources of the second communication apparatus are saved.

Based on the foregoing solutions, the first communication apparatus determines the first information used to request to initiate sensing, and sends the first information to the fourth communication apparatus. The fourth communication apparatus receives the first information from the first communication apparatus, determines the GPS-unavailable area in the allowable flight area of the terminal device based on the first information, and then sends, to the at least one second communication apparatus whose coverage includes the GPS-unavailable area, the second information that indicates to initiate sensing. In comparison with initiating sensing in the entire allowable flight area of the terminal device, this can reduce a quantity of access network devices that initiate sensing, thereby saving air interface resources of access network devices.

In a possible implementation, as shown in FIG. 11, after step S904, the communication method further includes the following steps S905 and S906.

S905: The at least one second communication apparatus separately sends fifth information to the fourth communication apparatus, and correspondingly, the fourth communication apparatus separately receives the fifth information from the at least one second communication apparatus.

Optionally, the fifth information indicates a sensed position of at least one object sensed by the second communication apparatus, and the at least one object includes the terminal device.

For example, the second communication apparatus may define different identifiers for different sensed objects, and the different objects may be distinguished by using the identifiers of the objects. However, the second communication apparatus cannot identify a correspondence between an object and the terminal device, that is, cannot identify which sensed object is the terminal device.

In a possible implementation, the fifth information includes a correspondence between an identifier and the sensed position of the at least one object. An example in which an identifier of an object #1 is denoted as OID#1, a sensed position of the object #1 is denoted as L#1, an identifier of an object #2 is denoted as OID#2, a sensed position of the object #2 is denoted as L#2, an identifier of an object #3 is denoted as OID#3, a sensed position of the object #3 is denoted as L#3, and the object #1, the object #2, and the object #3 include the terminal device is used. The fifth information includes {OID#1, L#1}, {OID#2, L#2}, and {OID#3, L#3}. {OID#1, L#1} represents a correspondence between OID#1 and L#1, {OID#2, L#2} represents a correspondence between OID#2 and L#2, and {OID#3, L#3} represents a correspondence between OID#3 and L#3.

Optionally, step S901 to step S905 may be performed once or a plurality of times. Performing step S901 to step S905 once may be understood as one communication process. A step after step S905 may be performed once after one communication process, or may be performed once after a plurality of communication processes. This is not limited.

S906: The fourth communication apparatus sends sixth information to the first communication apparatus, and correspondingly, the first communication apparatus receives the sixth information from the fourth communication apparatus. The sixth information indicates a sensed position of the terminal device.

In a possible implementation, the sixth information may include the sensed position of the at least one object sensed by the second communication apparatus.

For example, the sixth information includes the correspondence between the identifier and the sensed position of the at least one object. Based on the example in step S905, the sixth information includes {OID#1, L#1}, {OID#2, L#2}, and {OID#3, L#3}, where the object #1, the object #2, and the object #3 include the terminal device.

In the possible implementation, after receiving the sixth information, the first communication apparatus may determine a correspondence between an identifier of the terminal device and the sensed position of the terminal device, that is, identify the terminal device from the at least one object. Specific implementation is described in subsequent embodiments. Details are not described herein.

In another possible implementation, the sixth information may include the correspondence between an identifier of the terminal device and the sensed position of the terminal device.

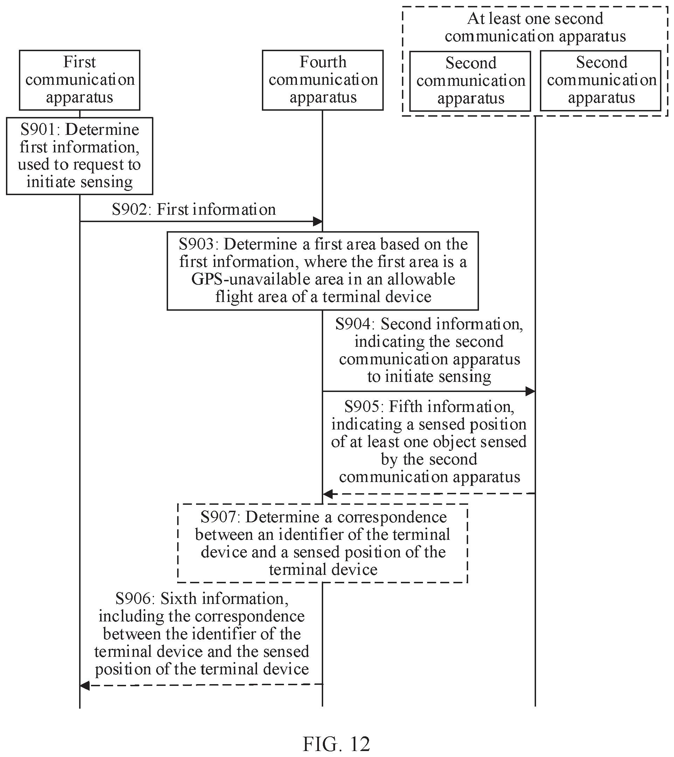

In this scenario, as shown in FIG. 12, after step S905 and before step S906, the communication method may further include step S907.

S907: The fourth communication apparatus determines the correspondence between the identifier of the terminal device and the sensed position of the terminal device.

Optionally, that the fourth communication apparatus determines the correspondence between the identifier of the terminal device and the sensed position of the terminal device may also be understood as that the fourth communication apparatus determines a correspondence between the identifier of the terminal device and an identifier that is of an object and that is included in the fifth information. Therefore, the sensed position of the terminal device is a sensed position that corresponds to the object and that is included in the fifth information.

In a possible implementation, when the terminal device flies from the GPS-reliable area in the allowable flight area of the terminal device to the first area, when the terminal device is in the coverage of the at least one second communication apparatus and is outside the first area, the fourth communication apparatus may parse the first information to learn of the GPS position of the terminal device, further parse the fifth information to learn of the sensed position of the at least one object sensed by the second communication apparatus, and determine the correspondence between the identifier of the terminal device and the identifier of the object based on the GPS position of the terminal device and the sensed position of the at least one object.

For example, as shown in FIG. 10, during flying, the terminal device is sequentially in the area a, the area b, and the first area, where the area b is one of the foregoing areas. When the terminal device is in the area a and the area b, the fourth communication apparatus may parse the first information to learn of the GPS position of the terminal device. When the terminal device is in the area b and the first area, the fourth communication apparatus may parse the fifth information to learn of the sensed position of the at least one object sensed by the second communication apparatus.

In a possible example, the fourth communication apparatus determines a correspondence between the identifier of the terminal device and an identifier of an object based on the GPS position of the terminal device and the sensed position of the at least one object sensed by the second communication apparatus in one communication process. In addition, the fourth communication apparatus may store the correspondence, and directly obtain the correspondence in a subsequent communication process.

For example, when the terminal device is in the area b shown in FIG. 10, an example in which the identifier of the terminal device is denoted as ID#1; the identifier of the object #1 is denoted as OID#1; the identifier of the object #2 is denoted as OID#2; the identifier of the object #3 is denoted as OID#3; and in one communication process, a GPS position of the terminal device is denoted as a GPS position #1, a sensed position of the object #1 is denoted as L#11, a sensed position of the object #2 is denoted as L#22, and a sensed position of the object #3 is denoted as L#33 is used. A distance between the GPS position #1 and each of L#11, L#22, and L#33 is calculated. If a distance between L#22 and the GPS position #1 is the shortest, it is considered that the object #2 is the terminal device, to be specific, the identifier ID#1 of the terminal device corresponds to the sensed position L#22 of the object #2. In this case, the sixth information is {ID#1, L#22}.

Optionally, there may be a sensing error when the second communication apparatus performs sensing, for example, a sensing angle error and the sensing distance error. A longer distance between an object and the second communication apparatus indicates a larger sensing distance error caused by the sensing angle error.

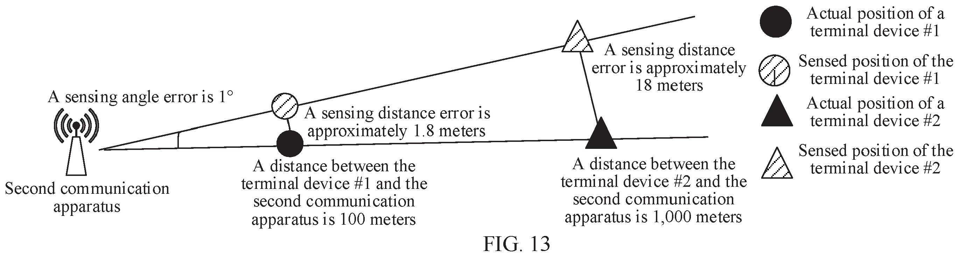

As shown in FIG. 13, an example in which the sensing angle error is 1° is used. When a distance between a terminal device #1 and the second communication apparatus is 100 meters, it can be learned, according to a geometric operation, that a sensing distance error between an actual position of the terminal device #1 and a sensed position of the terminal device #1 sensed by the second communication apparatus is approximately 1.8 meters. When a distance between a terminal device #2 and the second communication apparatus is 1,000 meters, according to a geometric operation, a sensing distance error between an actual position of the terminal device #2 and a sensed position of the terminal device #2 sensed by the second communication apparatus is approximately 18 meters.

Because there is a GPS positioning error during GPS positioning, and there is a sensing error when the second communication apparatus performs sensing, the correspondence between the identifier of the terminal device and the identifier of the object may be incorrectly determined.

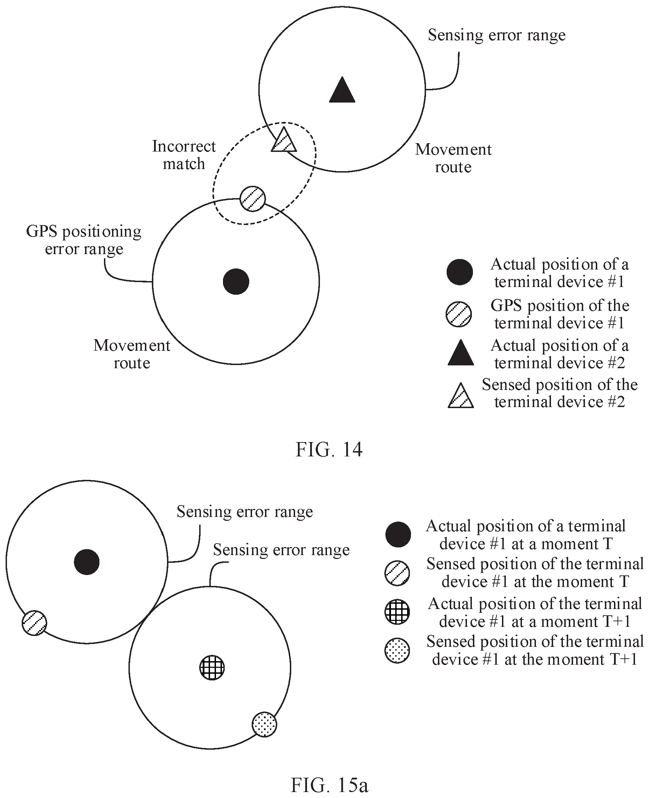

As shown in FIG. 14, an example in which a distance between a GPS position of a terminal device 1# and a sensed position of a terminal device 2# is the shortest is used. In this case, an identifier of the terminal device 1# corresponds to the sensed position of the terminal device 2#. This correspondence is incorrect.

In another possible example, the fourth communication apparatus determines the correspondence between the identifier of the terminal device and the sensed position of the terminal device based on at least one historical GPS position of the terminal device and a sensed position of at least one object sensed currently by the second communication apparatus.

For example, because GPS positioning accuracy is high and a positioning error is small, GPS positions, provided by a GPS, of the terminal device may be considered to be different in communication processes at different moments. In addition, in at least one communication process, the fourth communication apparatus may store the GPS position of the terminal device, to obtain the at least one historical GPS position of the terminal device. Then, a GPS movement route of the terminal device may be determined based on the at least one historical GPS position of the terminal device. The GPS movement route may be used to determine the correspondence between the identifier of the terminal device and the sensed position of the terminal device.

In a possible implementation, a GPS movement route of the terminal device up to a current moment may be learned of based on the at least one historical GPS position of the terminal device and a GPS position of the terminal device in a current communication process. Then, a distance between a sensed position of at least one object sensed by the second communication apparatus in the current communication process and the GPS movement route of the terminal device is calculated, and a sensed position of an object having a shortest distance with the GPS movement route of the terminal device is selected as the sensed position of the terminal device.

For example, when the terminal device is in the area b shown in FIG. 10, an example in which the identifier of the terminal device is denoted as ID#1; the identifier of the object #1 is denoted as OID#1; the identifier of the object #2 is denoted as OID#2; the identifier of the object #3 is denoted as OID#3; a GPS position of the terminal device is denoted as a GPS position #1 in a communication process at a historical moment T; and in a communication process at a current moment T+1, a GPS position of the terminal device is denoted as a GPS position #2, the sensed position of the object #1 is denoted as L#11, the sensed position of the object #2 is denoted as L#22, and the sensed position of the object #3 is denoted as L#33 is used. The GPS movement route of the terminal device may be learned of based on the GPS position #1 and the GPS position #2. Then, a distance between the GPS movement route and each of L#11, L#22, and L#33 is calculated. If a distance between L#22 and the GPS movement route is the shortest, it is considered that the object #2 is the terminal device, to be specific, the identifier ID#1 of the terminal device corresponds to the sensed position L#22 of the object #2. In this case, the sixth information is {ID#1, L#22}.

In another possible implementation, a GPS movement route of the terminal device may be learned of based on the at least one historical GPS position of the terminal device and a GPS position of the terminal device in a current communication process, a sensing movement route of the at least one object may be learned of based on a historical sensed position of the at least one object sensed by the second communication apparatus and a sensed position of the at least one object sensed by the second communication apparatus in the current communication process, a similarity between the sensing movement route of the at least one object and the GPS movement route of the terminal device is calculated, and a current sensed position of an object having a largest similarity with the GPS movement route of the terminal device is selected as the sensed position of the terminal device.

For example, when the terminal device is in the area b shown in FIG. 10, an example in which the identifier of the terminal device is denoted as ID#1; the identifier of the object #1 is denoted as OID#1; the identifier of the object #2 is denoted as OID#2; the identifier of the object #3 is denoted as OID#3; in a communication process at a historical moment T, a GPS position of the terminal device is denoted as a GPS position #1, a sensed position of the object #1 is denoted as L#1, a sensed position of the object #2 is denoted as L#2, and a sensed position of the object #3 is denoted as L#3; and in a communication process at a current moment T+1, a GPS position of the terminal device is denoted as a GPS position #2, a sensed position of the object #1 is denoted as L#11, a sensed position of the object #2 is denoted as L#22, and a sensed position of the object #3 is denoted as L#33 is used. The GPS movement route of the terminal device may be learned of based on the GPS position #1 and the GPS position #2, and is denoted as GSL; a sensing movement route of the object #1 may be learned of based on L#1 and L#11, and is denoted as SL#1; a sensing movement route of the object #2 may be learned of based on L#2 and L#22, and is denoted as SL#2; and a sensing movement route of the object #3 may be learned of based on L#3 and L#33, and is denoted as SL#3. Then, a similarity between GSL and each of SL#1, SL#2, and SL#3 is calculated. If a similarity between SL#2 and GSL is the largest, it is considered that the object #2 is the terminal device, to be specific, the identifier ID#1 of the terminal device corresponds to the sensed position L#22 of the object #2. In this case, the sixth information is {ID#1, L#22}.

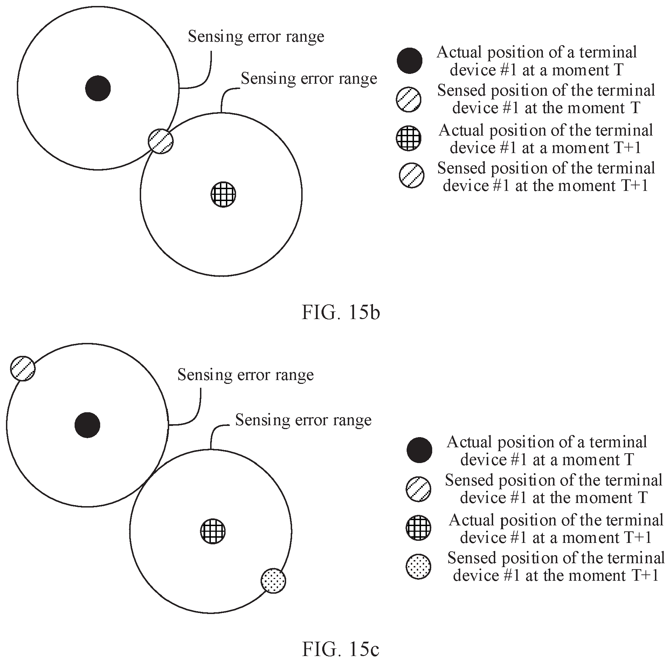

Because there is a sensing error between a sensed position of an object sensed by the second communication apparatus and a position of the object, sensed positions of a same terminal device sensed by the second communication apparatus at different moments may be the same or different. When sensed positions of a same terminal device sensed by the second communication apparatus at different moments are the same, a sensing movement route of the terminal device cannot be obtained. When sensed positions of a same terminal device sensed by the second communication apparatus at different moments are different, and a distance is greater than four times, a sensing movement route of the terminal device can be obtained. For example, as shown in FIG. 15a, FIG. 15b, and FIG. 15c, an example in which actual positions of the terminal device #1 at a moment T and a moment T+1 are different, the sensing distance error of the second communication apparatus is a radius of a circular area, and a sensing error range is the circular area in the figure is used. The sensed position of the terminal device #1 sensed by the second communication apparatus may be any position in the circular area. In an example shown in FIG. 15a, sensed positions of the terminal device #1 sensed by the second communication apparatus at the moment T and the moment T+1 are different. In this case, a sensing movement route of the terminal device #1 may be obtained. In an example shown in FIG. 15b, sensed positions of the terminal device #1 sensed by the second communication apparatus at the moment T and the moment T+1 are the same. In this case, a sensing movement route of the terminal device #1 cannot be obtained. In an example shown in FIG. 15c, sensed positions of the terminal device #1 sensed by the second communication apparatus at the moment T and the moment T+1 are different, and a distance between the two sensed positions is four times the sensing distance error.

When the distance between the terminal device and the second communication apparatus is greater than or equal to four times the sensing distance error, a sensing movement route of the terminal device can be obtained. Therefore, in step S904, when the first distance is greater than or equal to four times the sensing distance error of the second communication apparatus, the second communication apparatus may initiate sensing to learn of a sensing movement route of the terminal device.

An example in which the first distance is greater than four times the sensing distance error of the second communication apparatus is used. When the distance between the terminal device and the second communication apparatus is equal to the first distance, the second communication apparatus initiates sensing, and sensed positions of a terminal device sensed by the second communication apparatus at different moments may be different. Correspondingly, the fourth communication apparatus may learn of the sensing movement route of the terminal device based on the different sensed positions of the terminal device.

In another possible implementation, when the terminal is in the first area, the correspondence between the identifier of the terminal device and the identifier of the object may be directly obtained, that is, the identifier of the terminal device and the sensed position of the terminal device may be determined.

Based on the method, the fourth communication apparatus may determine the correspondence between the identifier of the terminal device and the sensed position of the terminal device, so that the first communication apparatus can parse the sixth information to learn of the correspondence between the identifier of the terminal device and the sensed position of the terminal device, and the first communication apparatus does not need to determine the correspondence between the identifier of the terminal device and the sensed position of the terminal device, thereby reducing complexity of the first communication apparatus.

Optionally, all the foregoing methods are applicable to a scenario of a plurality of terminal devices.

In a possible example, when there are a plurality of terminal devices in the communication system, the first communication apparatus sends a plurality of pieces of first information to the fourth communication apparatus, where the plurality of pieces of first information corresponds to the plurality of terminal devices. Correspondingly, after receiving the plurality of pieces of first information, the fourth communication apparatus determines a plurality of first areas based on the plurality of pieces of first information, and then determines at least one second communication apparatus based on the plurality of first areas. Coverage of the at least one second communication apparatus includes the plurality of first areas. If coverage of a second communication apparatus includes a part of the first areas respectively corresponding to the plurality of terminal devices, the second communication apparatus may provide a sensing service for the plurality of terminal devices, and the second communication apparatus is any one of the at least one second communication apparatus.

Based on this possible example, when the first information indicates the GPS position of the terminal device, the fourth communication apparatus may parse the plurality of pieces of first information to learn of GPS positions of the plurality of terminal devices. If the second communication apparatus provides the sensing service for the plurality of terminal devices, when a distance between a GPS position of a terminal device in the plurality of terminal devices and the second communication apparatus is greater than or equal to the first distance, or a distance between a GPS position of a terminal device and the second communication apparatus is greater than or equal to the first distance and less than or equal to the second distance, the second communication apparatus starts sensing, or the fourth communication apparatus sends the second information to the second communication apparatus.

The foregoing describes procedures of communication methods provided in this application. The following provides supplementary descriptions for the procedures of the communication methods provided in this application with reference to the foregoing different system architectures.

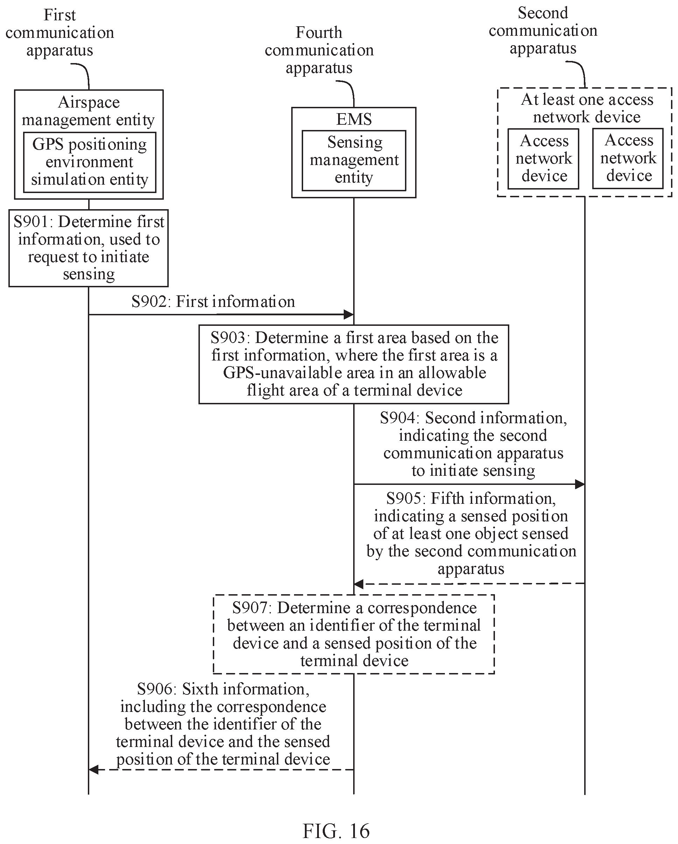

The communication system shown in Architecture 1 is used as an example. As shown in FIG. 16, a first communication apparatus is the airspace management entity, the second communication apparatus is the access network device, and the fourth communication apparatus is the EMS entity. The sensing management entity is in the fourth communication apparatus, and the GPS positioning environment simulation entity is in the first communication apparatus. In the communication system, a communication method includes step S901 to step S907. For details, refer to the related descriptions in the foregoing embodiments. Details are not described herein again.

The communication system shown in Architecture 2 is used as an example. The first communication apparatus is the airspace management entity, the second communication apparatus is the access network device, and the fourth communication apparatus is the EMS entity. The sensing management entity and the GPS positioning environment simulation entity are in the fourth communication apparatus. In the communication system, the communication method includes step S901 to step S907. For details, refer to the related descriptions in the foregoing embodiments. Details are not described herein again.

The communication system shown in Architecture 3 is used as an example. The first communication apparatus is the NMS entity, the second communication apparatus is the access network device, and the fourth communication apparatus is at least one EMS entity. The sensing management entity is in the fourth communication apparatus, and the GPS positioning environment simulation entity is in the airspace management entity.

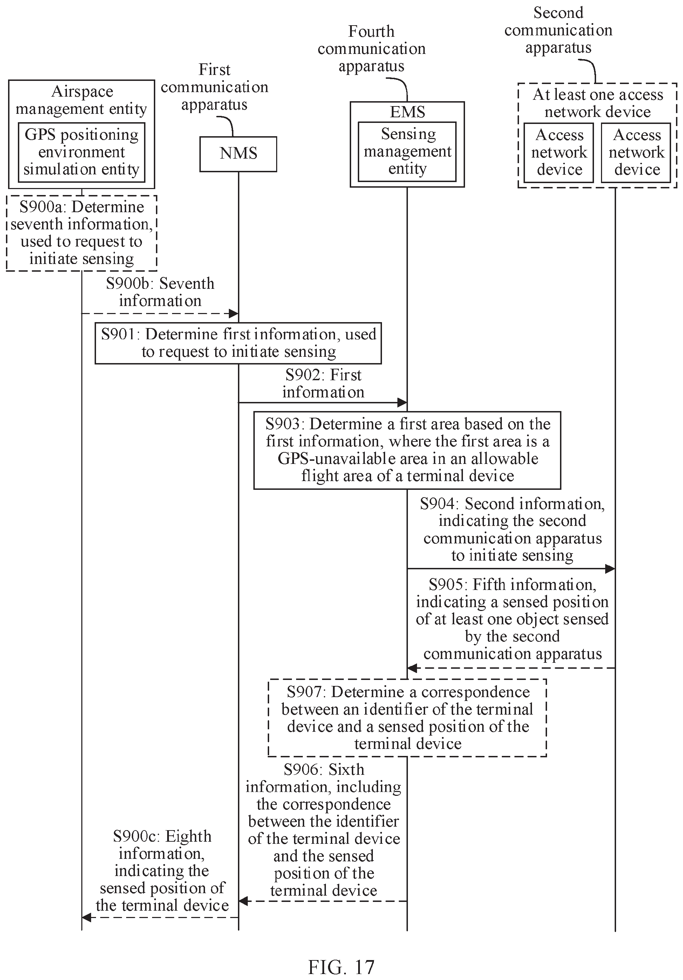

In the communication system, as shown in FIG. 17, the communication method includes step S901 to step S907. Before step S901, the communication method further includes step S900a and step S900b. After step S906, the communication method further includes step S900c. For details of step S901 to step S907, refer to the related descriptions in the foregoing embodiments. Details are not described herein again. The following describes in detail step S900a to step S900c.

S900a: The airspace management entity determines seventh information, where
optionally, the seventh information is used to request to initiate sensing.

Optionally, the seventh information indicates at least one of the following: the allowable flight area of the terminal device, the second area, the first area, or the GPS position of the terminal device.

In a first possible implementation, the seventh information may indicate the allowable flight area of the terminal device. For example, in Architecture 2 and Architecture 5, the seventh information may indicate the allowable flight area of the terminal device.

In a second possible implementation, the seventh information may indicate the first area, and the first area is the GPS-unavailable area in the allowable flight area of the terminal device. For example, in the communication systems shown in Architecture 1, Architecture 3, and Architecture 4, the seventh information may indicate the first area.

In a third possible implementation, the seventh information may indicate the allowable flight area of the terminal device and the second area. For example, in the communication systems shown in Architecture 1, Architecture 3, and Architecture 4, the seventh information may indicate the allowable flight area of the terminal device and the second area.

Based on the foregoing three implementations, the seventh information may further indicate the GPS position of the terminal device.

For related descriptions of the first area and the second area, refer to the related descriptions in step S901. Details are not described herein again.

S900b: The airspace management entity sends the seventh information to the first communication apparatus, and correspondingly, the first communication apparatus receives the seventh information from the airspace management entity.

Optionally, the first communication apparatus determines the first information based on the seventh information.

In a first possible implementation, when the seventh information indicates the allowable flight area of the terminal device, the first communication apparatus may parse the seventh information to learn of the allowable flight area of the terminal device, where the first information may indicate the allowable flight area of the terminal device.

In a second possible implementation, when the seventh information indicates the first area, the first communication apparatus may parse the seventh information to learn of the first area, where the first information may indicate the first area.

In a third possible implementation, when the seventh information indicates the allowable flight area of the terminal device and the second area, the first communication apparatus may parse the seventh information to learn of the allowable flight area of the terminal device and the second area, where the first information may indicate the allowable flight area of the terminal device and the second area, or the first information may indicate the first area.

Based on the foregoing three implementations, when the seventh information further indicates the GPS position of the terminal device, the first communication apparatus may further parse the seventh information to learn of the GPS position of the terminal device. The first information may further indicate the GPS position of the terminal device.

It may be understood that the NMS entity manages a plurality of EMS entities, and may learn of coverage of the plurality of EMS entities. Therefore, after receiving the seventh information, the NMS entity may select an EMS entity, as the fourth communication apparatus, from the plurality of EMS entities with reference to the seventh information. Then, the NMS entity sends the first information to the EMS entity.

S900c: The first communication apparatus sends eighth information to the airspace management entity, and correspondingly, the airspace management entity receives the eighth information from the first communication apparatus, where
optionally, the eighth information indicates a sensed position of the terminal device.

In a possible implementation, when the sixth information includes the sensed position of the at least one object sensed by the second communication apparatus, and the at least one object includes the terminal device, the eighth information may include the sensed position of the at least one object sensed by the second communication apparatus.

In another possible implementation, when the sixth information includes the correspondence between the identifier of the terminal device and the sensed position of the terminal device, the eighth information may include the correspondence between the identifier of the terminal device and the sensed position of the terminal device.

Based on this solution, the NMS entity may communicate with the at least one EMS entity, and in comparison with the communication system shown in Architecture 1 or Architecture 2, may provide a sensing service for the terminal device in a first area having a larger range.

The communication system shown in Architecture 4 is used as an example. The first communication apparatus is the NMS entity, the second communication apparatus is the access network device, and the fourth communication apparatus is the at least one EMS entity. The sensing management entity is in the fourth communication apparatus, and the GPS positioning environment simulation entity is in the first communication apparatus. Because the GPS positioning environment simulation entity is in the first communication apparatus, the first communication apparatus may obtain the second area.

In the communication system, the communication method includes step S901 to step S907, and step S900a to step S900c. For details of step S901 to step S907, refer to the related descriptions in the foregoing embodiments. Details are not described herein again. Step S900a to step S900c are similar to S900a to S900c in the communication system shown in Architecture 3, and a difference lies in that,
in step S900a, the seventh information may indicate the allowable flight area of the terminal device, or the seventh information may indicate the allowable flight area of the terminal device and the GPS position of the terminal device.

In step S900b, when the seventh information indicates the allowable flight area of the terminal device, the first communication apparatus parses the seventh information to learn of the allowable flight area of the terminal device. When the seventh information indicates the allowable flight area of the terminal device and the GPS position of the terminal device, the first communication apparatus parses the seventh information to learn of the allowable flight area of the terminal device, and then, the first communication apparatus may determine the first information based on the allowable flight area of the terminal device and the second area.

For technical effects brought by the communication method, refer to the technical effects brought by Architecture 3. Details are not described herein again.

The communication system shown in Architecture 5 is used as an example. The first communication apparatus is the airspace management entity, the second communication apparatus is the access network device, and the fourth communication apparatus is the EMS entity. The sensing management entity is in the EMS entity, and the GPS positioning environment simulation entity is in the third communication apparatus.

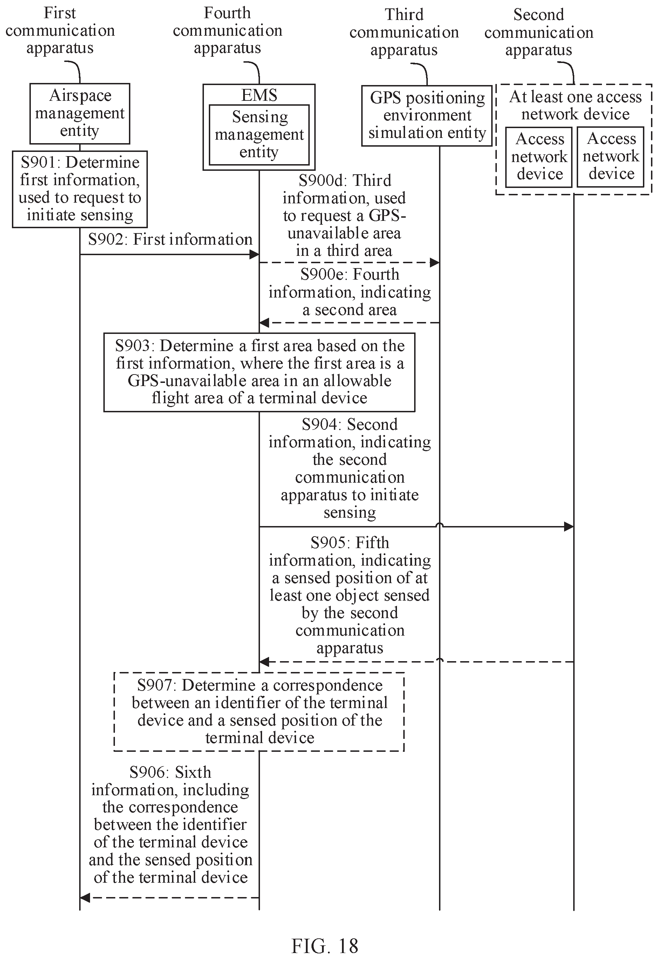

In the communication system, as shown in FIG. 18, the communication method includes step S901 to step S907, and after step S902 and before step S903, the communication method further includes step S900d and step S900e. For details of step S901 to step S907, refer to the related descriptions in the foregoing embodiments. Details are not described herein again. The following describes in detail step S900d and step S900e.

S900d: The second communication apparatus sends third information to the third communication apparatus, and correspondingly, the third communication apparatus receives the third information from the fourth communication apparatus, where
optionally, the third information is used to request the GPS-unavailable area in the third area. For example, the third area includes the allowable flight area of the terminal device, for example, an urban area.

Optionally, after receiving the third information, the third communication apparatus determines the performance of the GPS positioning of the third area based on the GPS satellite ephemeris to obtain a second area at a current moment.

S900e: The third communication apparatus sends fourth information to the second communication apparatus, and correspondingly, the fourth communication apparatus receives the fourth information from the third communication apparatus, where
optionally, the fourth information indicates the second area.

Optionally, the fourth communication apparatus parses the fourth information to learn of the second area. The fourth communication apparatus determines the first area based on the allowable flight area of the terminal device and the second area, where the first area is the overlapping area between the allowable flight area of the terminal device and the second area.

The foregoing mainly describes the solutions provided in this application. Correspondingly, this application further provides communication apparatuses. The communication apparatus is configured to implement the foregoing methods, or may implement functions of the first communication apparatus, the second communication apparatus, the third communication apparatus, or the fourth communication apparatus. The communication apparatus may be the first communication apparatus, the second communication apparatus, the third communication apparatus, or the fourth communication apparatus in the foregoing method embodiments, or may be a component that may be used in the first communication apparatus, the second communication apparatus, the third communication apparatus, or the fourth communication apparatus, for example, a chip or a chip system.

It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

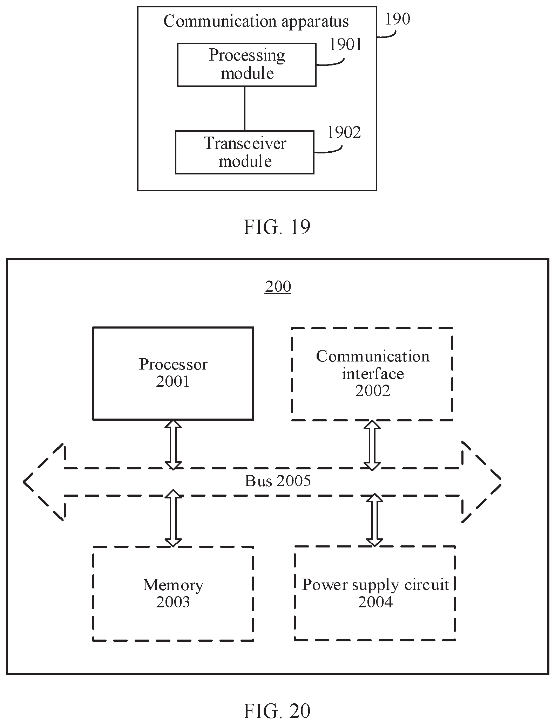

FIG. 19 is a diagram of a structure of a communication apparatus 190. The communication apparatus 190 includes a processing module 1901 and a transceiver module 1902. The communication apparatus 190 may be configured to implement functions of the foregoing first communication apparatus, second communication apparatus, third communication apparatus, or fourth communication apparatus.

In some embodiments, the communication apparatus 190 may further include a storage module (which is not shown in FIG. 19), configured to store program instructions and data.

In some embodiments, the transceiver module 1902 may also be referred to as a transceiver unit, and is configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module, respectively configured to perform receiving and sending steps performed by the first communication apparatus, the second communication apparatus, the third communication apparatus, or the fourth communication apparatus in the foregoing method embodiments, and/or configured to support another process of the technology described in this specification. The processing module 1901 may be configured to perform a processing (for example, determining) step performed by the first communication apparatus, the second communication apparatus, the third communication apparatus, or the fourth communication apparatus in the foregoing method embodiments, and/or configured to support another process of the technology described in this specification.

In some embodiments, when the communication apparatus 190 is configured to implement a function of the fourth communication apparatus,
The transceiver module 1902 is configured to receive first information from a first communication apparatus, where the first information is used to request to initiate sensing. The processing module 1901 is configured to determine a first area based on the first information, where the first area is a GPS-unavailable area in an allowable flight area of the terminal device. The transceiver module 1902 is further configured to send second information to at least one second communication apparatus, where the second information indicates the second communication apparatus to initiate sensing, and a coverage of the at least one second communication apparatus includes the first area.

Optionally, the transceiver module 1902 is further configured to send third information to the third communication apparatus, where the third information is used to request a GPS-unavailable area in a third area, and the third area includes the allowable flight area of the terminal device. The transceiver module 1902 is further configured to receive fourth information from the third communication apparatus, where the fourth information indicates a second area, and the second area is the GPS-unavailable area in the third area.

Optionally, the transceiver module 1902 is further configured to receive fifth information from the at least one second communication apparatus, where the fifth information indicates a sensed position of at least one object sensed by the second communication apparatus, and the at least one object includes the terminal device. The transceiver module 1902 is further configured to send sixth information to the first communication apparatus, where the sixth information indicates a sensed position of the terminal device.

Optionally, the processing module 1901 is further configured to determine a correspondence between an identifier of the terminal device and the sensed position of the terminal device based on at least one historical GPS position of the terminal device and the sensed position of the at least one object sensed by the second communication apparatus.

Optionally, that the transceiver module 1902 is further configured to send the second information to the at least one second communication apparatus includes: The transceiver module 1902 is further configured to: when a distance between the terminal device and the second communication apparatus is greater than or equal to a first distance, send the second information to the second communication apparatus.

In some embodiments, when the communication apparatus 190 is configured to implement a function of the first communication apparatus,
The processing module 1901 is configured to determine first information, where the first information is used to request to initiate sensing, the first information indicates at least one of the following: an allowable flight area of a terminal device, a first area, a second area, or a global positioning system GPS position of the terminal device, the first area is a GPS-unavailable area in the allowable flight area of the terminal device, the first area is an overlapping area between the allowable flight area of the terminal device and the second area, and a GPS is unavailable in the second area. The transceiver module 1902 is configured to send the first information.

Optionally, the transceiver module 1902 is further configured to receive sixth information, where the sixth information indicates a sensed position of the terminal device sensed by at least one second communication apparatus, and a coverage of the at least one second communication apparatus includes the first area.

All related content of the steps in the foregoing method embodiments may be cited in function descriptions of the corresponding functional modules. Details are not described herein again.

In this application, the communication apparatus 190 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In some embodiments, when the communication apparatus 190 in FIG. 19 is a chip or a chip system, a function/implementation process of the transceiver module 1902 may be implemented through an input/output interface (or a communication interface) of the chip or the chip system, and a function/implementation process of the processing module 1901 may be implemented through a processor (or a processing circuit) of the chip or the chip system.

The communication apparatus 190 provided in this embodiment may perform the foregoing methods. Therefore, for technical effects that can be achieved by the communication apparatus, refer to the foregoing method embodiments. Details are not described herein again.

In a possible product form factor, the first communication apparatus, the second communication apparatus, the third communication apparatus, or the fourth communication apparatus in this embodiment of this application may be implemented by using the following: one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform the functions described in this application.

In another possible product form factor, the first communication apparatus, the second communication apparatus, the third communication apparatus, or the fourth communication apparatus in this application may use a composition structure shown in FIG. 20, or include components shown in FIG. 20. FIG. 20 is a diagram of composition of a communication apparatus 200 according to this application.

As shown in FIG. 20, the communication apparatus 200 includes at least one processor 2001. Optionally, the communication apparatus further includes a communication interface 2002.

When related program instructions are executed in the at least one processor 2001, the apparatus 200 may be caused to implement the communication method provided in any one of the foregoing embodiments and the possible designs thereof. Alternatively, the processor 2001 is configured to implement, by using a logic circuit or executing code instructions, the communication method provided in any one of the foregoing embodiments and the possible designs thereof.

The communication interface 2002 may be configured to receive the program instructions and transmit the program instructions to the processor. Alternatively, the communication interface 2002 may be configured to perform communication interaction between the communication apparatus 200 and another communication device, for example, exchange control signaling and/or service data. For example, the communication interface 2002 may be configured to: receive a signal from an apparatus other than the apparatus 200 and transmit the signal to the processor 2001, or send a signal from the processor 2001 to a communication apparatus other than the apparatus 200.

Optionally, the communication interface 2002 may be a code and/or data read/write interface circuit, or the communication interface 2002 may be a signal transmission interface circuit between a communication processor and a transceiver machine, or may be a pin of a chip.

Optionally, the communication apparatus 200 may further include at least one memory 2003. The memory 2003 may be configured to store related program instructions and/or data that are/is required. It should be noted that the memory 2003 may exist independently of the processor 2001, or may be integrated with the processor 2001. The memory 2003 may be inside the communication apparatus 200, or may be located outside the communication apparatus 200. This is not limited.

Optionally, the communication apparatus 200 may further include a power supply circuit 2004, and the power supply circuit 2004 may be configured to supply power to the processor 2001. The power supply circuit 2004 may be in a same chip as the processor 2001, or may be in a chip other than a chip in which the processor 2001 is located.

Optionally, the communication apparatus 200 may further include a bus 2005, and parts of the communication apparatus 200 may be interconnected through the bus 2005.

Optionally, the processor in this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any regular processor or the like.

Optionally, the memory in this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memories (random access memories, RAMs) are available in many forms, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, the power supply circuit in this embodiment of this application includes but is not limited to at least one of the following: a power supply line, a power supply subsystem, a power management chip, a power consumption management processor, or a power consumption management control circuit.

In some embodiments, in hardware implementation, a person skilled in the art may figure out that the communication apparatus 190 shown in FIG. 19 may be in a form of the communication apparatus 200 shown in FIG. 20.

In an example, a function/implementation process of the processing module 1901 in FIG. 19 may be implemented by the processor 2001 in the communication apparatus 200 shown in FIG. 20 by invoking computer-executable instructions stored in the memory 2003. The function/implementation process of the transceiver module 1902 in FIG. 19 may be implemented through the communication interface 2002 in the communication apparatus 200 shown in FIG. 20.

It should be noted that the structure shown in FIG. 20 does not constitute any specific limitation on the first communication apparatus, the second communication apparatus, the third communication apparatus, or the fourth communication apparatus. For example, in some other embodiments of this application, the first communication apparatus, the second communication apparatus, the third communication apparatus, or the fourth communication apparatus may include more or fewer components than those shown in the figure, some components may be combined, some components may be split, or components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be directly read from the memory, or may be read via another device) and transmit the computer-executable instructions to the processor.

In another possible implementation, the communication apparatus further includes a communication interface, and the communication interface may be configured to communicate with a module outside the communication apparatus.

It may be understood that the communication apparatus may be a chip or a chip system. When the communication apparatus is the chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for convenient and brief description, for a specific operating process of the foregoing system, apparatus, and unit, refer to a corresponding process in the foregoing method embodiments. Details are not described herein again.

It may be understood that the system, apparatuses, and methods described in this application may alternatively be implemented in another manner. For example, the apparatus embodiments described above are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may be or may not be physically separated, that is, may be in one place or distributed on a plurality of network units. Components displayed as units may be or may be not physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions described according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, during implementing of this application that claims protection, a person skilled in the art may understand and implement another variation of the disclosed embodiments by viewing the accompanying drawings, disclosed content, and appended claims. In the claims, "comprising" (comprising) does not exclude another component or step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the accompanying claims, and are considered as any or all of modifications, variations, combinations or equivalents that cover the scope of this application. It is clear that a person skilled in the art can make various modifications and variations to this application without departing from the scope of this application. In this way, if these modifications and variations of this application fall within the scope of the claims of this application and equivalent technologies thereof, this application is also intended to cover these modifications and variations.

## Claims

1. A communication method, wherein the method comprises:
receiving first information from a first communication apparatus, wherein the first information is used to request to initiate sensing;
determining a first area based on the first information, wherein the first area is a global positioning system GPS-unavailable area in an allowable flight area of a terminal device; and
sending second information to at least one second communication apparatus, wherein the second information indicates the second communication apparatus to initiate sensing, and a coverage of the at least one second communication apparatus comprises the first area.

2. The method according to claim 1, wherein the first information indicates at least one of the following: the allowable flight area of the terminal device, a second area, the first area, or a GPS position of the terminal device, wherein
a GPS is unavailable in the second area; and the first area is an overlapping area between the allowable flight area of the terminal device and the second area.

3. The method according to claim 2, wherein when the first information does not indicate the second area, the method further comprises:
sending third information to a third communication apparatus, wherein the third information is used to request a GPS-unavailable area in a third area, and the third area comprises the allowable flight area of the terminal device; and
receiving fourth information from the third communication apparatus, wherein the fourth information indicates the second area, and the second area is the GPS-unavailable area in the third area.

4. The method according to any one of claims 1 to 3, wherein the second information comprises at least one of the following: sensing start time, sensing end time, a sensing period, or a first distance, and when a distance between the terminal device and the second communication apparatus is greater than or equal to the first distance, the second communication apparatus initiates sensing.

5. The method according to any one of claims 1 to 4, wherein the method further comprises:
receiving fifth information from the at least one second communication apparatus, wherein the fifth information indicates a sensed position of at least one object sensed by the second communication apparatus, and the at least one object comprises the terminal device; and
sending sixth information to the first communication apparatus, wherein the sixth information indicates a sensed position of the terminal device.

6. The method according to claim 5, wherein the sixth information comprises the sensed position of the at least one object sensed by the second communication apparatus; or the sixth information comprises a correspondence between an identifier of the terminal device and the sensed position of the terminal device.

7. The method according to claim 6, wherein the method further comprises:
determining the correspondence between the identifier of the terminal device and the sensed position of the terminal device based on at least one historical GPS position of the terminal device and the sensed position of the at least one object sensed by the second communication apparatus.

8. The method according to any one of claims 1 to 7, wherein the sending the second information to at least one second communication apparatus comprises:
when the distance between the terminal device and the second communication apparatus is greater than or equal to the first distance, sending the second information to the second communication apparatus.

9. The method according to claim 4 or 8, wherein the first distance is greater than or equal to four times a sensing distance error of the second communication apparatus.

10. A communication method, wherein the method comprises:
determining first information, wherein the first information is used to request to initiate sensing, the first information indicates at least one of the following: an allowable flight area of a terminal device, a first area, a second area, or a global positioning system GPS position of the terminal device, the first area is a GPS-unavailable area in the allowable flight area of the terminal device, the first area is an overlapping area between the allowable flight area of the terminal device and the second area, and a GPS is unavailable in the second area; and
sending the first information.

11. The method according to claim 10, wherein the method further comprises:
receiving sixth information, wherein the sixth information indicates a sensed position of the terminal device sensed by at least one second communication apparatus, and a coverage of the at least one second communication apparatus comprises the first area.

12. The method according to claim 11, wherein the sixth information comprises a sensed position of at least one object sensed by the second communication apparatus, and the at least one object comprises the terminal device; or
the sixth information comprises a correspondence between an identifier of the terminal device and the sensed position of the terminal device.

13. A communication apparatus, comprising a module or a unit configured to perform the method according to any one of claims 1 to 12.

14. A communication apparatus, wherein the communication apparatus comprises a processor; and the processor is configured to run a computer program or instructions, to cause the communication apparatus to perform the method according to any one of claims 1 to 12.

15. A computer-readable storage medium, wherein the computer-readable storage medium stores a computer program or instructions, and when the computer program or the instructions are executed by a computer, the computer is caused to perform the method according to any one of claims 1 to 12.

16. A computer program product, wherein the computer program product comprises a computer program or instructions, and when the computer program or the instructions are executed by a computer, the computer is caused to perform the method according to any one of claims 1 to 12.

17. A chip, wherein the chip comprises a processor, and the chip is configured to execute program instructions in a memory, to perform the method according to any one of claims 1 to 12.
